# DEMANDE DE BREVET EUROPEEN

(11) **EP 3 511 768 A1**
(43) Date de publication de la demande: **17.07.2019**
(21) Numéro de dépôt: 19290001.7
(22) Date de dépôt: 07.01.2019
(51) Int. Cl.: G02C 7/10, G02B 1/115

(54) **NOUVEAU VERRE OCULAIRE RÉALISÉ EN UN MATÉRIAU COMPOSITE À USAGE OPTIQUE, AINSI QUE SON PROCÉDÉ D'OBTENTION**

(30) Priorité: 11.01.2018 FR 1800035
(71) Demandeur: Dalloz Creations, 39200 Saint-Claude (FR)
(72) Inventeur: LE Quang, Quoc, 39200 Saint-Claude (FR); MY, Hien, 39200 Saint-Claude (FR); Robillard, Rudy, 39240 Genod (FR); Monneret, Michel, 39200 Saint-Claude (FR)
(74) Mandataire: Gallochat, Alain

(57) **Abrégé**

La présente invention concerne un nouveau verre oculaire réalisé en un matériau composite à usage optique, ainsi que son procédé d'obtention.

Ce matériau consiste en un substrat (1) présentant une face convexe tournée vers l'observateur sur laquelle est déposée une couche (2) de vernis anti-rayure et une face concave dirigée vers l'oeil du porteur du verre sur laquelle sont déposées successivement une couche (3) de vernis anti-rayure, une couche (4) constituée d'un film métallique, une couche (5) réalisée en métal précieux, une couche (6) constituée d'un film métallique, une couche (7) d'oxyde métallique, une couche (8) constituée d'un film métallique et une couche (9) d'oxyde métallique.

Application aux lunettes ou bandeaux, solaires ou ophtalmiques.

## Description

La présente invention concerne un nouveau verre oculaire réalisé en un matériau composite à usage optique, ainsi que son procédé d'obtention.

De façon plus précise, les verres obtenus à partir du matériau selon la présente invention présentent une couche d'un métal précieux tel que l'or, ou d'autres métaux précieux qui seront mentionnés dans la présente description.

Certains métaux précieux sont déjà utilisés sur des verres pour apporter des propriétés techniques spécifiques par exemple : « or » sur les casques de pompier pour filtrer les infrarouges, également sur certains casques de pilotes de chasse, et le but recherché est alors la protection des yeux du porteur de tels verres.

Dans le cas des verres oculaires selon l'invention, la couche de métal précieux n'a pas un rôle technique de protection, protecteur, mais remplit un rôle cosmétique, où le but recherché est l'aspect du métal précieux à la surface du verre (vu par les observateurs du verre), et de limiter la réflexion sur la face interne pour rendre le verre confortable pour les utilisateurs.

Le brevet européen EP 2 274 648, déposé au nom de la société Christian Dalloz Sunoptics décrit un verre de lunettes du type comprenant plusieurs couches, une desdites couches étant un substrat transparent, une autre couche, située du côté de l'observateur dudit verre, étant en métal précieux, une couche antireflet étant par ailleurs disposée entre ledit substrat transparent et ladite couche de métal précieux.

Dans le type de verre décrit dans le brevet européen précité, l'aspect « métal précieux » est aperçu principalement par la réflexion de la dernière couche du métal précieux. Si ce dernier n'est pas résistant comme dans le cas de l'or ou du platine, il est nécessaire de le protéger en mettant une couche de protection. Il y a alors la nécessité de recouvrir la couche de métal précieux par un vernis « top coat » (avec une caractéristique d'adhérence sur le métal précieux et présentant en outre une caractéristique anti-rayure) ; il en résulte des interférences constructives « visibles » dues :
- à l'écart important entre l'indice de réfraction du vernis et celui du métal précieux ;
- à la faible épaisseur du vernis déposé en « top coat » sur la couche d'or.

Le brevet US 6 793 339 décrit un verre oculaire comportant un substrat présentant une face concave, du côté du porteur du verre, et une face convexe, du côté de l'observateur, lesdites faces étant recouvertes d'un vernis anti-rayure ; une pluralité de couches étant en outre disposée indifféremment, du côté convexe, au milieu ou du côté concave du verre oculaire ; ces couches consistent en une alternance de matériaux diélectriques et de matériaux métalliques. Le choix de ces matériaux et leur épaisseur déterminent la couleur du verre perçue par l'observateur.

Le verre oculaire selon la présente invention pallie ces inconvénients et présente des avantages qui seront précisés plus avant dans la présente description.

De façon plus précise, le verre oculaire selon la présente invention, du type comportant un substrat présentant une face convexe tournée vers l'observateur et une face concave tournée vers l'oeil du porteur dudit verre, comprend :
- une première couche de vernis anti-rayure sur la face convexe dudit substrat,
- une deuxième couche de vernis anti-rayure disposée sur la face concave dudit substrat,
- une pluralité de couches, dont une couche réalisée en un métal précieux, disposée sur ladite deuxième couche de vernis anti-rayure, du côté de l'oeil du porteur dudit verre, ladite couche de métal précieux étant prise en sandwich entre deux films métalliques disposé sous ladite deuxième couche de vernis anti-rayure.

Plus préférentiellement, le verre selon la présente invention comprend en outre une couche d'un film métallique pris en sandwich entre deux couches d'oxyde métallique.

Avantageusement, ce sandwich couche d'un film métallique/couches d'oxyde métallique est situé sous le sandwich couche de métal précieux/couches de film métallique.

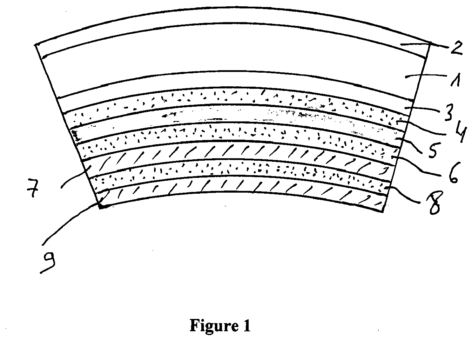

D'autres avantages et caractéristiques apparaîtront mieux à la lecture de la description qui va suivre, faite en regard de la Figure 1 illustrant de façon schématique les différentes couches constituant un mode de réalisation préférentiel du verre oculaire selon l'invention.

Selon la Figure 1, le verre oculaire selon l'invention comprend un substrat (1) transparent. Ce substrat (1) peut être réalisé en un matériau minéral ou organique tel que le polycarbonate ou tout autre matériau utilisé dans les verres de lunettes tel que du polyamide, du polymère CR39 ou NXT, ou bien un copolyester basé sur des monomères : « dimethyl terephtalate-1,4-cyclohexanedimethanol-2,2,4,4-tetramethylcyclobutane-1,3-diol ».

Sur la face convexe du substrat (1) est disposée une couche de vernis anti-rayure (2), alors que sur la partie concave dudit substrat (1) est disposée également une couche de vernis anti-rayure (3). Chacune de ces couches (2), (3) a une épaisseur comprise entre 1 et 10 µm. Le rôle de la couche (2) est de protéger le substrat (1) contre toute abrasion, celui de la couche (3) est de permettre une meilleure adhérence de la couche (4) au substrat (1).

La couche (4) est constituée d'un film métallique réalisé en un métal, préférentiellement le chrome mais qui peut être aussi réalisé en un autre métal tel que le nickel, le fer, le titane, l'aluminium, le zinc, le plomb, l'étain, le tantale, le tungstène ou bien en un alliage de ces métaux entre eux ou avec le chrome. Cette couche a été insérée entre la couche (3) de vernis anti-rayure et la couche (5) de métal précieux permettant d'obtenir une meilleure adhérence de la couche (5) de métal précieux.

La couche (5) est réalisée en métal précieux choisi parmi les métaux suivants : or, argent, platine, palladium, rhodium, ruthénium, scandium, osmium ou iridium ainsi que dans l'un des alliages obtenus à partir de ces métaux. C'est cette couche qui va conférer au verre selon l'invention l'effet esthétique recherché, à savoir l'apparence du métal précieux en question. L'agencement des couches (4), (5), (6) permet à la fois la suppression des franges d'interférences apparaissant dans certaines conditions s'agissant du verre oculaire faisant l'objet du brevet européen EP 2 274 648 ; il permet également au métal précieux constituant la couche (5) d'être parfaitement protégé des agressions physiques et/ou chimiques.

La couche (6) consiste en un film métallique, le métal choisi étant l'un des métaux susceptibles de constituer la couche (4).

La couche (7) est constituée d'une couche d'oxyde métallique, comme par exemple l'oxyde de silicium, mais elle pourrait également être constituée d'oxyde de titane, de tantale ou de zirconium.

La couche (8) consiste en un film métallique, le métal étant choisi parmi ceux énumérés pour réaliser les couches (4) ou (6).

La couche (9), à savoir celle qui sera la plus proche de l'oeil du porteur du verre selon l'invention, sera réalisée en un oxyde métallique, le métal étant choisi parmi les métaux suivants : silicium, titane, tantale, zirconium.

L'aspect recherché du « métal précieux » est le résultat du rendu de l'ensemble des couches (3), (4), (5), (6), (7), (8) et (9). L'avantage de cet assemblage est que la couche (5) de métal précieux est prise en sandwich entre deux couches (4) et (6). De ce fait, comme cela a été précisé précédemment, la couche (5) de métal précieux est protégée naturellement, contrairement à l'ensemble décrit dans le brevet EP 2 274 648 précité où la couche de métal précieux est à l'extérieur et doit donc être protégée par une couche de protection.

L'ensemble des couches (6), (7), (8) et (9) a pour but de limiter la réflexion sur la face concave du verre, qu'il s'agisse de la réflexion pour le porteur par rapport au premier sandwich (4), (5), (6), ou par le film métallique (8) et ainsi renforcer l'aspect « métal précieux » à la surface du verre. Il convient d'ailleurs de noter que la couche (6) est à la fois un vernis anti-rayure, mais permet également une meilleure adhérence du deuxième sandwich (7), (8), (9).

Dans le cas où le métal précieux est l'or, les valeurs préférentielles de ces couches sont les suivantes :
- couche (4) : entre 1 et 50 nm
- couche (5) : entre 1 et 200 nm
- couche (6) : entre 1 et 200 nm
- couche (7) : entre 20 et 300 nm
- couche (8) : entre 1 et 100 nm
- couche (9) : entre 20 et 300 nm

Bien entendu, pour des raisons de clarté, les épaisseurs relatives des différentes couches ne sont pas respectées. Pour mémoire, le substrat (1) présente une partie convexe tournée vers l'observateur et une face concave située du côté de l'oeil du porteur dudit verre, la couche (2) étant disposée sur la partie convexe du substrat (1), alors que les couches (3), (4), (5), (6), (7), (8) et (9) sont disposées sur la partie concave dudit substrat (1).

Différents tests ont été conduits afin d'établir que le verre oculaire selon l'invention résiste à des conditions extrêmes :
- résistance à la chaleur : le verre oculaire est maintenu dans un four à 90°C pendant 60 minutes.
- résistance au froid : le verre oculaire est maintenu à - 20°C pendant deux heures.
- Test de l'eau chaude : le verre oculaire est immergé dans de l'eau portée à 80°C pendant 10 minutes.
- Test à l'immersion dans l'eau salée : le verre oculaire est plongé dans une solution saline à 3% en NaCl pendant 24 heures.

A l'issue de ces tests et malgré la combinaison de griffures profondes + test au scotch (test normatif), pratiquées sur le verre oculaire ayant subi chacun desdits tests, aucun décollement ou segmentation des couches n'est observé.

Le verre oculaire selon l'invention sera utilisé sous forme de lunettes ou de bandeaux, solaires ou ophtalmiques.

Selon un mode préférentiel de réalisation du verre oculaire selon l'invention, les couches de vernis anti-rayure (2) et (3) sont appliquées par trempage du substrat (1) dans un bain de vernis ou par toute autre technique d'application telle que le vernissage/enduction par centrifugation, connue dans ce domaine technique sous le nom de « flow coating » ; elles peuvent également être appliquées par la méthode du vernissage/enduction par débit contrôlé, connue dans ce domaine technique sous le nom de « spin coating », très utilisée sur les verres dont le substrat est réalisé en polymère thermodurcissable CR39 ou bien encore par le procédé de pulvérisation/spray très utilisée pour les bandeaux/shields. Les couches (4), (5), (6), (7), (8) et (9) sont déposées une par une par évaporation sous vide.

## Revendications

1. Verre oculaire, du type comportant un substrat (1) présentant une face convexe tournée vers l'observateur et une face concave tournée vers l'oeil du porteur dudit verre, du type comprenant :
• une première couche (2) de vernis anti-rayure disposée sur la face convexe dudit substrat (1),
• une deuxième couche (3) de vernis anti-rayure disposée sur la face concave dudit substrat (1),
• une pluralité de couches, dont une couche (5) réalisée en un métal précieux, choisi dans le groupe composé par l'or, l'argent, le platine, le palladium, le rhodium, le ruthénium, le scandium, l'osmium, l'iridium, ou un alliage obtenu à partir de ces métaux, disposée sur ladite deuxième couche (3) de vernis anti-rayure, du côté de l'oeil du porteur dudit verre, **caractérisé en ce que** ladite couche (5) de métal précieux est prise en sandwich entre deux couches (4) et (6) d'un film métallique.

2. Verre oculaire selon la revendication 1, **caractérisé en ce que** le métal précieux de la couche (5) est l'or.

3. Verre oculaire selon l'une des revendications 1 ou 2, **caractérisé en ce que** sous le sandwich formé par les couches (4), (5) et (6) est disposée une couche constituée d'un film métallique (8), lui-même pris en sandwich entre deux couches (7) et (9) d'oxyde métallique.

4. Verre oculaire selon la revendication 3, **caractérisé en ce que** les couches (4), (6) et (8) sont réalisées en un film métallique, le métal étant le chrome.

5. Verre oculaire selon la revendication 3, **caractérisé en ce que** les couches (4), (6) et (8) sont réalisées en un film métallique, le métal étant choisi dans le groupe suivant de métaux : nickel, fer, titane, aluminium, zinc, plomb, étain, tantale, tungstène ou bien en un alliage de ces métaux entre eux ou avec le chrome.

6. Verre oculaire selon l'une quelconque des revendications 3 à 5, **caractérisé en ce que** les couches (7) et (9) sont constituées d'oxyde de silicium.

7. Verre oculaire selon l'une quelconque des revendications 3 à 5, **caractérisé en ce que** les couches (7) et (9) sont constituées d'un oxyde métallique choisi parmi les oxydes suivants : oxyde de titane, oxyde de tantale ou oxyde de zirconium.

8. Verre oculaire selon l'une quelconque des revendications 1 à 7, **caractérisé en ce que** l'épaisseur des couches (2) et (3) est comprise entre 1 et 10 µm.

9. Verre oculaire selon l'une quelconque des revendications 3 à 8, **caractérisé en ce que** l'épaisseur des couches est la suivante :
• couche (4) : entre 1 et 50 nm
• couche (5) : entre 1 et 200 nm
• couche (6) : entre 1 et 200 nm
• couche (7) : entre 20 et 300 nm
• couche (8) : entre 1 et 100 nm
• couche (9) : entre 20 et 300 nm

10. Procédé d'obtention d'un verre oculaire selon l'une quelconque des revendications 1 à 9, **caractérisé en ce que** les couches (2) et (3) sont appliquées par trempage du substrat (1) dans un bain de vernis ou par la technique du « flow coating ».

11. Procédé d'obtention d'un verre oculaire selon l'une quelconque des revendications 3 à 9, **caractérisé en ce que** les couches (4), (5), (6), (7), (8) et (9) sont déposées une par une par évaporation sous vide.

12. Lunettes ou bandeaux, solaires ou ophtalmiques, réalisés en un verre oculaire selon l'une quelconque des revendications 1 à 9.
